# EUROPEAN PATENT APPLICATION

(11) **EP 1 683 630 A2**
(43) Date of publication of application: **26.07.2006**
(21) Application number: 05013799.1
(22) Date of filing: 27.06.2005
(51) Int. Cl.: B32B 27/06, B32B 21/08, B32B 7/12

(54) **Covering material, particularly for the furniture industry and relative manufacturing method**

(30) Priority: 19.01.2005 IT MI20050054
(71) Applicant: B.V.R. SAS di Tarpini Giuseppe & C., 22040 Lurago d'Erba (Co) (IT)
(72) Inventor: Orio, Stefano, 22044 Inverigo (Co) (IT)
(74) Representative: Petruzziello, Aldo

(57) **Abstract**

A covering material (12) for the furniture industry is described, comprising a core sheet (20) coupled, by means of a layer of glue (7), to a transparent plastic film (9).

## Description

The present invention refers to the sector of covering materials for edges and surfaces in general and in particular to the furniture and woodwork industry and to covering materials for furniture, frames, window profiles, flooring profiles, door frames and the like.

Currently known on the market are covering materials for furniture, such as veneers consisting of sheets wood which are glued to the surface of furniture. These veneers, though imparting an excellent aesthetic appearance, present the drawback of being too delicate and of deteriorating easily through scratching or the action of chemical agents. To overcome these drawbacks at least in part, the veneers are varnished with a protective varnish. However, the thin layer of varnish can easily be scratched and thus the above-mentioned drawbacks continue to exist.

Furthermore, the veneers are excessively stiff and fragile and therefore difficult to apply to curved surfaces because they are liable to break due to bending stress.

The object of the present invention is to provide a covering material that has an excellent aesthetic appearance and at the same time an excellent resistance to abrasion, scratching and the action of chemical agents.

This object is achieved in accordance with the invention having the characteristics listed in appended independent claim 1.

Another object of the present invention is to provide a manufacturing process for a covering material that is practical, inexpensive and simple to perform.

This object is achieved in accordance with the invention with the characteristics listed in appended independent claim 11.

Advantageous embodiments of the invention are apparent from the dependent claims.

The covering material for the furniture industry according to the invention comprises a core sheet coupled by means of a layer of glue to a film of transparent plastic material.

The core sheet is preferably a sheet of wood. In this manner the transparent plastic material allows the patterns typical of types of wood to be seen and at the same time imparts an excellent resistance to abrasion, scratching and chemical agents.

Furthermore, the transparent plastic material gives the covering product better flexibility and workability especially on rounded surfaces.

Further characteristics of the invention will be made clearer by the detail description that follows, referring to a purely exemplifying and therefore non-limiting embodiment thereof, illustrated in the appended drawings, in which:
Figure 1 is a perspective view diagrammatically illustrating the stages of production of the covering material according to the invention, and
Figure 2 is an enlarged cross section along the plane of section II-II of Figure 1.

The manufacturing method for the covering material for the furniture industry according to the invention will be described with the aid of the figures.

The method starts from sheets of wood veneer 2 obtained by prior planning or rotary cutting of trunks of wood. These sheets of wood veneer 2 can have a thickness of about 0.2-0.8 mm, preferably 0.5 mm.

The sheets of wood 2 can subsequently be joined lengthwise to obtain the desired width of the roll which will be used in the subsequent stages of processing.

The sheet of wood 2 are squared and joined crosswise, generally with a comb A or straight pattern, by applying adhesive tape 3. Thus, the various sheets of wood 2 joined together continuously form a single sheet of wood 20 which is rolled up so as to obtain a roll 21.

The rolls 21 of sheets of wood thus obtained can be processed on continuous production machines. The operations that can be carried out are:
1) Supporting operations. These consist in gluing a supporting substrate 4 onto the sheet of wood 20 unrolled from the roll 21. The supporting substrate 4 can be, for example, impregnated paper, plastic film, non-woven fabric (cellulose fibre) and the like. The supporting material 4 serves to ensure a better grip on the surface on which the wood sheet must be applied.
2) Smoothing operations. These consist in sizing the sheet of wood 20 unrolled from the roll 21 to reach the required thickness.
3) Tinting operations. These consist in colouring the sheet of wood 20 unwound from the roll 21 to obtain the required colour.

Clearly, according to the invention any of the above operations can be performed, or even none of these operations.

Subsequently, the sheet of wood 20, possibly with the supporting substrate 4, is wound into a reel 5. The reel 5 is fed towards a gluing machine 6 which deposits a layer of transparent glue 7 on the surface of the sheet of wood 20. The transparent glue 7 is an acrylic or polyurethane glue.

A film 9 of transparent plastic material unwound from a spool 8 is applied to the layer of glue 7. The film 9 has a thickness comprised between 10-300 microns, preferably 100 microns. The film 9 is preferably polyvinyl chloride (PVC), but generally other plastic materials can be applied.

A surface finishing varnish 11, such as an acrylic, polyester or polyurethane based varnish is optionally, applied to the transparent film 9, for example by means of a varnishing machine 10.

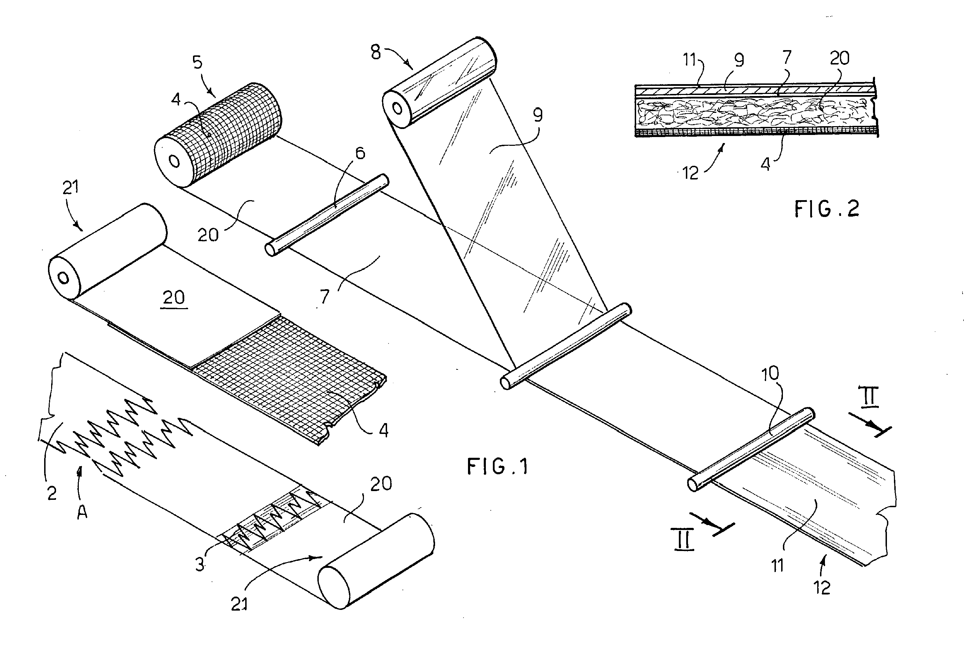

In this manner a finished product 12 in the form of a sheet of covering material, according to the invention as shown in Figure 2, is obtained. The sheet of covering material 12 comprises a sheet of wood 20 coupled to a transparent plastic film 9 by means of a layer of transparent glue 7. The sheet of covering material 12 may optionally comprise a supporting substrate 4 and a surface finishing layer 11.

Alternatively, the sheet of wood 20 may be replaced with a sheet of paper printed with typical wood patterns or possibly also with fantasy colours. This sheet of printed paper is coupled to the transparent plastic film 9.

The thicknesses of the sheet of covering material 12 are designed so that it can be wound in a reel so as to form rolls. The sheet of covering material 12 can be cut into strips and applied, by means of gluing, to flat surfaces by means of a conventional press, or to shaped surfaces by means of a membrane press or to profile shapes by means of a rod profiling machine.

Numerous changes and modifications of detail within the reach of a person skilled in the art can be made to the present invention without thereby departing from the scope of the invention as set forth in the appended claims.

## Claims

1. A covering material (12), particularly for the furniture industry, comprising a core sheet (20) coupled, by means of a layer of glue (7), to a transparent plastic film (9).

2. A covering material (12) according to claim 1, **characterised in that** it is wound into a roll.

3. A covering material (12) according to claim 1 or 2, **characterised in that** said core sheet (20) comprises types of wood.

4. A covering material (12) according to claim 1 or 2, **characterised in that** core sheet (20) comprises a sheet of paper printed with decorative patterns typical of wood or possibly with fantasy colours.

5. A covering material (12) according to any one of the preceding claims, **characterised in that** the thickness of said core sheet (20) is between 0.2 and 0.8 mm, preferably 0.5 mm.

6. A covering material (12) according to any one of the preceding claims, **characterised in that** said transparent plastic film (9) is a PVC film.

7. A covering material (12) according to any one of the preceding claims, **characterised in that** the thickness said transparent plastic film (9) is between 10 - 300 microns and is preferably 100 microns.

8. A covering material (12) according to any one of the preceding claims, **characterised in that** said layer of transparent glue (7) comprises an acrylic or polyurethane glue.

9. A covering material (12) according to any one of the preceding claims, **characterised in that** it further comprises a layer of surface finishing (11) applied to said transparent film (9), said surface finishing layer (11) comprising an acrylic, polyester or polyurethane based varnish.

10. A covering material (12) according to any one of the preceding claims, **characterised in** it further comprises a supporting substrate (4), such as non-woven fabric, resin-impregnated paper, or plastic film.

11. A manufacturing process for a covering material (12) for the furniture industry comprising the following steps:
- feeding a core sheet (20) from a reel (5) towards a gluing machine (6),
- feeding a sheet of transparent plastic (9) from a reel towards said gluing machine (6),
- coupling of said core sheet (20) with said transparent plastic sheet (9), by means of interposition of a layer of glue (7) between the two sheets.

12. A process according to claim 11, **characterised in that** it further comprises the step of winding said covering material (12) into a roll.

13. A process according to claim 11 or 12, **characterised in that** said core sheet (20) comprises a sheet of wood or a sheet of paper printed with decorative patterns typical of wood or with fantasy colours.

14. A procedure according to claim 13, **characterised in that** it further comprises a step of surface finishing of said transparent plastic film (9) by applying a transparent varnish (11).
